# DEMANDE DE BREVET EUROPEEN

(11) **EP 0 533 584 A1**
(43) Date de publication de la demande: **24.03.1993**
(21) Numéro de dépôt: 92402577.8
(22) Date de dépôt: 18.09.1992
(51) Int. Cl.: G06K 19/07

(54) **Dispositif de réception et d'émission d'informations par voie radio-électrique, et système d'échange d'informations comportant un tel dispositif**

(30) Priorité: 20.09.1991 FR 9111621
(71) Demandeur: Hamel, Dominique Bernard, F-14000 Caen (FR); Collot, Richard Henri, F-1400 Caen (FR)
(72) Inventeur: Hamel, Dominique Bernard, F-14000 Caen (FR); Collot, Richard Henri, F-1400 Caen (FR)
(74) Mandataire: Barnay, André François

(57) **Abrégé**

Ce dispositif de réception et d'émission d'informations par voie radio-électrique, intégré dans un objet portatif et adapté pour échanger des informations avec une station de traitement d'informations, est caractérisé en ce qu'il comporte des moyens (4) de réception d'informations émises par la station, en modulation de fréquence, des moyens (6) de démodulation des signaux de sortie des moyens de réception, une unité (1) de traitement d'informations pour le traitement des informations de sortie des moyens de démodulation, et un oscillateur (42, 43, 44, 45, 46, 47, 48) piloté par l'unité de traitement d'informations (1) et relié à des moyens (41) d'émission d'informations, en modulation d'amplitude, en direction de la station.

## Description

La présente invention concerne un dispositif de réception et d'émission d'informations par voie radio-électrique, intégré dans un objet portatif et adapté pour échanger des informations avec une station de traitement d'informations, et un système d'échange d'informations comportant un tel dispositif.

Des systèmes d'échange d'informations entre des objets portatifs et des stations de traitement d'informations sont déjà connus dans l'état de la technique et ont été développés pour permettre des échanges d'informations entre ces deux organes, sans contact physique entre ceux-ci.

En effet, dans certaines applications, ce contact physique est relativement contraignant.

On connait par exemple du document FR.88 16 672, un dispositif pour l'échange d'informations à distance entre un objet portatif et une station.

Ce dispositif est basé sur la variation d'un signal électromagnétique aux bornes d'un cadre inductif d'un portique, lors d'un couplage inductif à distance avec un objet portatif tel qu'une carte à mémoire, qui soit significative de la présence de cette carte dans le portique.

Cependant, tous les dispositifs développés dans l'état de la technique présentent un certain nombre d'inconvénients au niveau de leur structure relativement complexe, de la transmission peu fiable des informations entre la station et l'objet portatif, de leur faible portée de fonctionnement et nécessitent notamment un positionnement relatif précis des deux éléments dans certaines conditions d'utilisation.

Le but de l'invention est donc de résoudre ces problèmes en proposant un dispositif de réception et d'émission d'informations qui soit simple, fiable et dont l'encombrement soit le plus réduit possible.

A cet effet, l'invention a pour objet un dispositif de réception et d'émission d'informations par voie radio-électrique, intégré dans un objet portatif et adapté pour échanger des informations avec une station de traitement d'informations, caractérisé en ce qu'il comporte des moyens de réception d'informations émises par la station, en modulation de fréquence, des moyens de démodulation des signaux de sortie des moyens de réception, une unité de traitement d'informations pour le traitement des informations de sortie des moyens de démodulation, et un oscillateur piloté par l'unité de traitement d'informations et relié à des moyens d'émission d'informations, en modulation d'amplitude, en direction de la station.

Selon un autre aspect, l'invention a également pour objet un système d'échange d'informations entre une station de traitement d'informations et un objet portatif, caractérisé en ce que l'objet portatif comporte un tel dispositif.

L'invention sera mieux comprise à l'aide de la description qui va suivre, donnée uniquement à titre d'exemple et faite en se référant aux dessins annexés, sur lesquels :
- la Fig.1 représente un schéma électrique des moyens de réception et d'émission d'informations entrant dans la constitution d'un dispositif selon l'invention; et
- la Fig.2 représente un schéma synoptique illustrant le fonctionnement de moyens de veille pouvant entrer dans la constitution d'un dispositif selon l'invention.

Ainsi qu'on l'a indiqué précédemment, le dispositif selon l'invention peut recevoir et émettre des informations par voie radio-électrique afin d'échanger des informations avec une station de traitement d'informations dans un système d'échange d'informations.

Ces différents systèmes d'échange d'informations étant bien connus dans l'état de la technique, on ne les décrira pas plus en détail.

On notera cependant que le dispositif selon l'invention est intégré dans un objet portatif tel qu'une carte par exemple à circuit intégré.

Cette carte peut se présenter par exemple sur un support de dimensions identiques à celles d'une carte à mémoire à contact (ISO) mais peut également être intégrée dans tout type de support.

Comme cela est bien connu, ces cartes présentent des usages multiples, comme par exemple le paiement, l'identification de porteur, etc.. et peuvent être complétées si besoin est, par d'autres moyens d'identification plus classiques, comme des perforations ou des pistes magnétiques permettant de coder des informations qui soient facilement accessibles aux différents matériels de décodage existants déjà sur le marché.

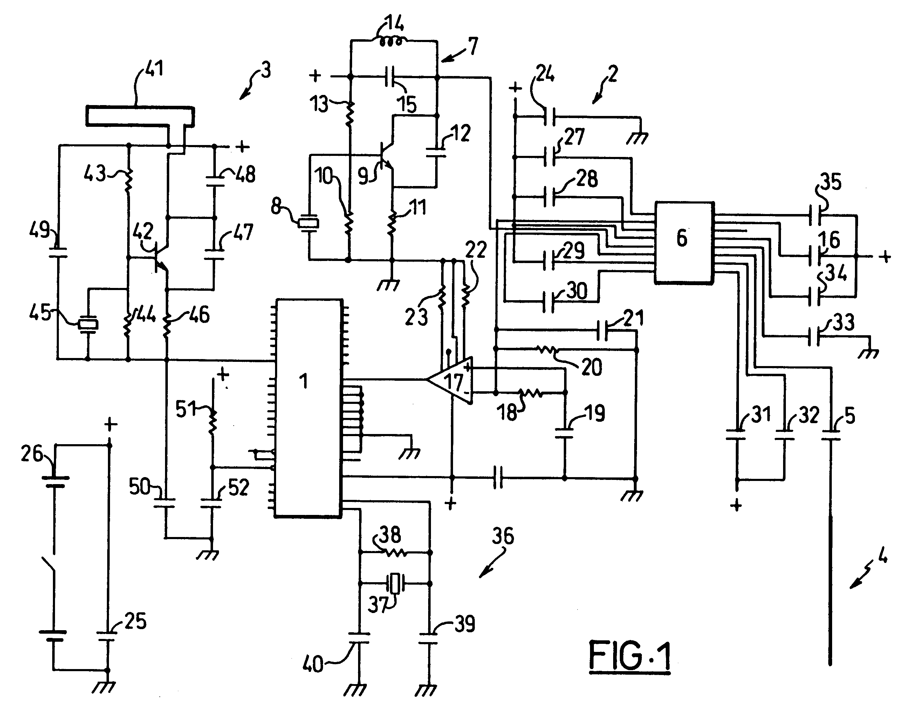

Ainsi qu'on peut le voir sur la Fig.1, le dispositif de réception et d'émission selon l'invention est basé sur une unité centrale de traitement d'informations désignée par la référence générale 1 sur cette figure.

Cette unité centrale de traitement d'informations peut être constituée par tout micro-contrôleur de type approprié, comme par exemple celui connu sous la référence MC 68 HC 805C4 commercialisé par la société MOTOROLA.

Le dispositif selon l'invention comporte deux parties, l'une, désignée par la référence générale 2, concernant la réception d'informations transmises par voie radio-électrique par la station en direction de l'objet portatif dans lequel est intégré le dispositif selon l'invention et l'autre, désignée par la référence générale 3, concernant l'émission d'informations par voie radio-électrique, de l'objet portatif en direction de la station.

On donne ci-dessous les différentes caractéristiques d'un exemple de réalisation du dispositif selon l'invention.

### TRANSMISSION DISPOSITIF-STATION FULL DUPLEX TRANSMISSION DISPOSITIF VERS STATION :

- Modulation d'amplitude
- Porteuse à 32 MHz environ
- Indice de modulation M = 100%
- Antenne cadre intégrée dans le support du dispositif
- Puissance d'émission O DBm (1 mW) env.
- Vitesse de 300 à 19200 Bds

### TRANSMISSION STATION VERS DISPOSITIF :

- Modulation de fréquence
- Porteuse à 28 MHz environ
- Décalage de fréquence = + ou - 3 KHz env.
- Antenne filaire intégrée dans le support du dispositif
- Sensibilité de réception du dispositif 5 µ volt environ
- Vitesse de 300 à 2400 Bds

### CARACTERISTIQUES DU DISPOSITIF :

- Alimentation : piles
- Durée de vie : de l'ordre de plusieurs années
- Mémoire de type mémoire à contrôle d'accès ou
- Microcontrôleur :
   - Protocole de transmission avec récupération d'erreurs
   - Algorithmes de cryptographie (GOC, DES, RSA ...)
   - Schémas d'authentification dispositif-station et/ou station-dispositif
   - Confidentialité de la transmission
   - Intégrité de la transmission
   - ....

Le principe de réception en modulation de fréquence du dispositif repose sur l'utilisation d'une fréquence intermédiaire faible qui permet l'intégration facile de cette fonction de réception dans le dispositif.

Par ailleurs, la très grande sensibilité de cette fonction de réception permet également l'intégration dans le dispositif, d'une antenne de réception désadaptée qui suffit pour permettre le fonctionnement de celui-ci et l'implantation des composants sur le support du dispositif permet d'éviter les différents problèmes d'interférences connus.

L'utilisation d'une fréquence intermédiaire basse FI permet de résoudre les problèmes liés à l'intégration de ce circuit de réception, à savoir le réglage de différents circuits d'accord avec des circuits RC et non LC beaucoup plus volumineux pour une fréquence intermédiaire choisie trop grande, des condensateurs de trop forte valeur pour une fréquence intermédiaire choisie trop basse et la possibilité d'intégration des condensateurs dans les circuits RC mentionnés précédemment.

Le circuit de réception 2 comporte donc une antenne 4 connectée à travers un condensateur de découplage 5 à une entrée d'un démodulateur 6 par exemple du type récepteur-démodulateur TDA 7010 T fabriqué par la société PHILIPS.

Ce signal reçu de l'antenne 4 est alors mélangé à un signal de fréquence sensiblement identique et après passage dans des filtres, on ne conserve que les composantes basses fréquences du signal, de manière classique.

A cet effet, ce démodulateur 6 reçoit un signal de démodulation de sortie d'un oscillateur local désigné par la référence générale 7 sur cette figure.

Cet oscillateur est basé sur l'utilisation d'un quartz 8 connecté entre la masse et la base d'un transistor NPN 9. Une résistance 10 est également connectée entre cette base du transistor 9 et la masse.

Une résistance 11 est connectée entre l'émetteur du transistor 9 et la masse, tandis qu'un condensateur 12 est connecté entre l'émetteur et le collecteur de celui-ci.

La base de ce transistor 9 est également reliée à la borne positive de l'alimentation à travers une résistance 13 et cette borne positive de l'alimentation est également reliée au collecteur du transistor 9 à travers une inductance 14 et un condensateur 15 en parallèle.

Le signal de sortie de cet oscillateur 7 est prélevé sur le collecteur du transistor 9 et introduit dans le démodulateur 6 pour permettre la démodulation du signal de sortie des moyens de réception.

La fréquence d'oscillation de cet oscillateur est déterminée par le quartz 8. L'utilisation d'un tel quartz présente des avantages par rapport à l'utilisation d'un circuit résonant LC classique dans la mesure où il permet une meilleure stabilité en fréquence et il n'est pas nécessaire de choisir des composants avec une précision extrême.

Les résistances 13 et 10 assurent la polarisation de la base du transistor 9, tandis que la résistance 11 connectée sur l'émetteur du transistor permet l'autorégulation de celui-ci.

En effet, lorsque le courant de collecteur de ce transistor augmente, la tension d'émetteur augmente également. La tension de base restant constante, la différence de potentiel V_{BE} entre la base et l'émetteur, tend à faire chuter le courant de collecteur de ce transistor.

Le condensateur 12 assure l'entretien de l'oscillation en provoquant une réaction. Ce condensateur est formé en tout ou partie par la capacité parasite du transistor.

Le signal de sortie de cet oscillateur est mélangé au signal d'entrée du récepteur et le signal résultant est ensuite envoyé dans un limiteur de tension pour augmenter son rapport signal sur bruit et se prémunir d'éventuelles modulations d'amplitude parasites.

Ensuite, ce signal est appliqué au démodulateur 6 qui lui aussi bénéficie de la fréquence intermédiaire faible pour le choix des composants RC (condensateur 16).

On notera que le composant TDA 7010 T mentionné précédemment remplit toutes ces fonctions et intégré de plus toutes les résistances des circuits RC associés.

Le signal de sortie de ce démodulateur 6 est prélevé sur la broche 2 de celui-ci et envoyé sur l'entrée inverseuse d'un amplificateur opérationnel 17.

Cette entrée inverseuse est également reliée à la masse à travers une résistance 18 et un condensateur 19.

L'entrée non-inverseuse de cet amplificateur opérationnel est reliée au point milieu entre ce condensateur et cette résistance.

L'entrée inverseuse de cet amplificateur opérationnel 17 est également reliée à la masse à travers une résistance 20 et un condensateur 21 en parallèle.

Cet amplificateur opérationnel joue le rôle d'une bascule permettant de redonner une forme carrée au signal de sortie du démodulateur .

Cet amplificateur opérationnel trouve une tension de référence automatiquement à l'aide du circuit constitué par la résistance 18 et le condensateur 19.

Une résistance 22 connectée à la masse et à la broche 1 de cet amplificateur opérationnel, permet de fixer la ligne à l'état de repos (niveau 1).

Une autre résistance 23 connectée à la masse et à la broche 5 de ce composant, permet d'obtenir une faible consommation de cet amplificateur.

La sortie de cet amplificateur opérationnel est reliée à l'entrée d'informations de l'unité de traitement d'informations 1.

On notera qu'un condensateur 24 permet de découpler l'alimentation du démodulateur 6 et qu'un condensateur 25 connecté aux bornes des moyens d'alimentation 26 constitués par exemple par des piles ou autres, permet de découpler l'alimentation générale des circuits du dispositif.

Plusieurs condensateurs désignés par les références 27, 28, 29, 30, 31, 32, 33, 34 et 35 sont connectés à différentes broches du démodulateur 6 et avec les condensateurs 21 et 16 et la résistance 20, permettent d'assurer le paramètrage de ce démodulateur de manière classique.

L'unité de traitement d'informations est également reliée à une horloge interne désignée par la référence générale 36 et comprenant un quartz 37 aux bornes duquel est connectée une résistance 38. Chaque borne de ce quartz est reliée à la masse à travers un condensateur 39,40 et à une borne d'entrée d'horloge de l'unité de traitement d'informations.

On conçoit donc que les informations qui sont émises par voie radio-électrique en modulation de fréquence par la station, sont reçues par l'antenne 4 du dispositif, démodulées dans le démodulateur 6, remises en forme dans l'amplificateur opérationnel 17 et introduites dans l'unité de traitement d'informations 1 pour leur traitement et/ou leur stockage.

Le circuit d'émission de signaux du dispositif selon l'invention comporte quant à lui une antenne d'émission 41 connectée entre la borne positive de l'alimentation et le collecteur d'un transistor NPN 42.

La base de ce transistor 42 est également reliée à la borne positive de l'alimentation à travers une résistance 43 et à une sortie de commande de l'unité centrale de traitement d'informations 1 à travers une résistance 44 aux bornes de laquelle est connecté un quartz 45.

L'émetteur du transistor NPN 42 est également relié à cette sortie de l'unité de traitement d'informations 1 à travers une résistance 46 et à son émetteur à travers un condensateur 47. Ce collecteur du transistor 42 est également relié à la borne positive de l'alimentation à travers un condensateur 48. Un condensateur 49 est connecté entre la borne positive de l'alimentation et la sortie de commande de l'unité centrale de traitement d'informations.

Ce condensateur 49 permet de découpler l'alimentation du circuit oscillateur.

La sortie de commande de l'unité de traitement d'informations est également reliée à la masse à travers un condensateur 50. Le point milieu d'une branche comprenant une résistance 51 et un condensateur 52, connectée entre la borne positive de l'alimentation et la masse, est également relié à une borne de réinitialisation de l'unité de traitement d'informations.

L'oscillateur du circuit d'émission décrit précédemment fonctionne de la même façon que l'oscillateur 7 du circuit de réception.

En effet, la fréquence d'oscillation est déterminée par le quartz 45 et les résistances 43 et 44 assurent la polarisation du transistor 42.

La résistance 46 connectée sur l'émetteur de ce transistor permet l'autorégulation de celui-ci et le condensateur 47 assure l'entretien de l'oscillation en provoquant une réaction.

Par rapport à l'oscillateur 7 décrit précédemment, on a donc remplacé l'inductance 14 par l'antenne 41 pour avoir un circuit complet oscillateur-émetteur.

L'antenne étant connectée en série avec le collecteur du transistor, la consommation d'énergie nécessaire à la fonction d'oscillation est restituée intégralement à l'antenne pour l'émission et si on coupe cette antenne, il n'y a plus d'oscillation d'où une amélioration du rendement du circuit.

La modulation d'amplitude se fait avec un indice de modulation par exemple de 100%. Cette modulation en tout ou rien est pilotée par la sortie de commande de l'unité centrale 1 qui commute ou non la masse du circuit oscillateur-émetteur en fonction des informations à émettre en direction de la station.

En conséquence, l'émission d'un train de bits à zéro ne consomme aucune énergie.

Cependant, il est également possible de moduler cette information avec un indice de modulation différent de 100%, notamment pour se prémunir des problèmes de bruit pendant l'émission des trains de bits à zéro, en ajoutant une résistance entre la masse et le point commun entre la résistance 46 et le quartz 45.

La puissance d'émission peut être ajustée par la modification de l'un des deux paramètres suivants, à savoir la valeur de cette résistance 46 et la surface de l'antenne d'émission.

La structure de l'oscillateur-émetteur de la partie d'émission d'informations étant similaire à l'oscillateur 7 de la partie de réception, il est envisageable d'utiliser le même circuit oscillateur pour l'émission et la réception, ce qui a comme conséquence immédiate de restreindre le mode de transmission au mode HALF-DUPLEX et de réduire le coût et l'encombrement de l'ensemble.

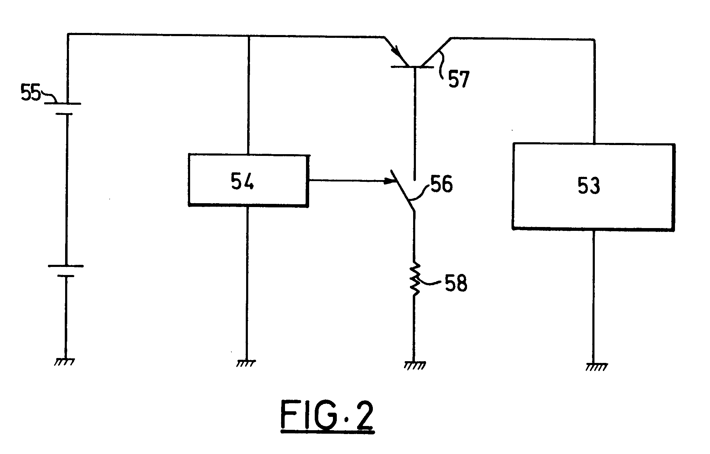

Sur la Fig.2, on a représenté un schéma synoptique de moyens de veille pouvant entrer dans la constitution d'un dispositif selon l'invention et permettant d'assurer l'alimentation ou non de l'ensemble des circuits représentés sur la Fig.1 et désignés par la référence générale 53 sur cette figure 2, lors de l'activation de ceux-ci.

Cette fonction est assurée par tout organe approprié désigné par la référence 54 et constitué par exemple par un organe de détection d'émission ou un organe actionnable par l'utilisateur, connecté en parallèle sur l'alimentation 55. Cette fonction de veille agit sur un interrupteur 56 connecté entre la base d'un transistor PNP 57 et la masse à travers une résistance 58. Le circuit émetteur-collecteur de ce transistor assure la liaison entre l'alimentation et le reste des circuits du dispositif.

Le dispositif selon l'invention permet d'obtenir une structure miniaturisée.

Bien entendu, d'autres modes de réalisation du dispositif selon l'invention peuvent être envisagés.

Il va de soi également que la station avec laquelle le dispositif échange des informations, comporte des moyens de réception et d'émission d'informations correspondants de structure classique et qui ne seront donc pas décrits dans le détail.

## Revendications

1. Dispositif de réception et d'émission d'informations par voie radio-électrique, intégré dans un objet portatif et adapté pour échanger des informations avec une station de traitement d'informations, caractérisé en ce qu'il comporte des moyens (4) de réception d'informations émises par la station, en modulation de fréquence, des moyens (6) de démodulation des signaux de sortie des moyens de réception, une unité (1) de traitement d'informations pour le traitement des informations de sortie des moyens de démodulation, et un oscillateur (42,43,44,45,46,47,48) piloté par l'unité de traitement d'informations (1) et relié à des moyens (41) d'émission d'informations, en modulation d'amplitude, en direction de la station.

2. Dispositif selon la revendication 1, caractérisé en ce que les moyens de démodulation (6) sont reliés à un oscillateur (7) de génération d'un signal de démodulation.

3. Dispositif selon la revendication 1 ou 2, caractérisé en ce qu'un amplificateur opérationnel (17) est connecté entre la sortie d'informations du démodulateur (6) et l'unité centrale de traitement d'informations (1).

4. Dispositif selon l'une quelconque des revendications précédentes, caractérisé en ce que l'oscillateur relié aux moyens d'émission d'informations comporte un transistor NPN (42) dont la base est polarisée par un pont de résistance (43,44), un quartz (45) étant connecté aux bornes de l'une (44) de ces résistances, dont l'émetteur est chargé par une résistance (46) et dont le collecteur est relié à une borne des moyens d'émission (41) dont l'autre borne est reliée à la borne positive de l'alimentation, l'émetteur et le collecteur du transistor étant reliés à travers un condensateur (47) et le collecteur de ce transistor étant relié à la borne positive de l'alimentation à travers un condensateur (48).

5. Dispositif selon la revendication 4, caractérisé en ce que l'une des bornes du quartz (45), de la résistance (44) de polarisation de la base du transistor (42) et de la résistance (46) de charge du collecteur de ce transistor, est reliée à une sortie de commande de l'unité de traitement d'informations (1).

6. Dispositif selon l'une des revendications précédentes, caractérisé en ce que les moyens d'émission et de réception d'informations comprennent dés antennes (4,41) de réception et d'émission intégrées dans le support du dispositif.

7. Dispositif selon l'une quelconque des revendications précédentes, caractérisé en ce qu'il comporte des moyens de veille (54) pour commander l'alimentation du reste des circuits du dispositif lors de l'activation de ceux-ci.

8. Système d'échange d'informations entre une station de traitement d'informations et un objet portatif, caractérisé en ce que l'objet portatif comporte un dispositif selon l'une quelconque des revendications précédentes.
